# EUROPEAN PATENT SPECIFICATION

(11) **EP 0 846 291 B1**
(45) Date of publication and mention of the grant of the patent: **30.07.2003**
(21) Application number: 97918302.7
(22) Date of filing: 14.05.1997
(51) Int. Cl.: G06F 13/00, G06F 9/30, G06F 9/28, G06F 12/04

(54) **PROCESSOR WITH AN INSTRUCTION CACHE**
PROZESSOR MIT BEFEHLSCACHESPEICHER
PROCESSEUR AVEC MEMOIRE CACHE D'INSTRUCTIONS

(30) Priority: 15.05.1996 US 648333; 15.05.1996 US 649732
(43) Date of publication of application: 10.06.1998
(73) Proprietor: TRIMEDIA TECHNOLOGIES, INC., Sunnyvale, California 94086 (US)
(72) Inventor: ANG, Michael, NL-5656 AA Eindhoven (NL); JACOBS, Eino, NL-5656 AA Eindhoven (NL); HAMPAPURAM, Hari, NL-5656 AA Eindhoven (NL); LEE, Yen, C., NL-5656 AA Eindhoven (NL)
(74) Representative: Van kan, Johan Joseph Hubert, Ir.
(86) International application number: IB9700552
(87) International publication number: WO97043715

(56) References cited:
- WO-A-94/10630
- WO-A-94/27216
- US-A- 5 179 680
- US-A- 5 233 694
- US-A- 5 442 760

## Description

The invention relates to a computer processor with an instruction cache and a method of generating instructions for such a computer processor.

The invention relates more in particular to VLIW (Very Long Instruction Word) processors and in particular to instruction formats for such processors and an apparatus and method for processing such instruction formats.

VLIW processors have instruction words including a plurality of issue slots. The processors also include a plurality of functional units. Each functional unit is for executing a set of operations of a given type. Each functional unit is RISC-like in that it can begin an instruction in each machine cycle in a pipe-lined manner. Each issue slot is for holding a respective operation. All of the operations in a same instruction word are to be begun in parallel on the functional unit in a single cycle of the processor. Thus the VLIW implements fine-grained parallelism.

Thus, typically an instruction on a VLIW machine includes a plurality of operations. On conventional machines, each operation might be referred to as a separate instruction. However, in the VLIW machine, each instruction is composed of operations or no-ops (dummy operations).

Like conventional processors, VLIW processors use a memory device, such as a disk drive to store instruction streams for execution on the processor. A VLIW processor can also use caches, like conventional processors, to store pieces of the instruction streams with high bandwidth accessibility to the processor.

The instruction in the VLIW machine is built up by a programmer or compiler out of these operations. Thus the scheduling in the VLIW processor is software controlled.

The VLIW processor can be compared with other types of parallel processors such as vector processors and superscalar processors as follows. Vector processors have single operations which are performed on multiple data items simultaneously. Superscalar processors implement fine-grained parallelism, like the VLIW processors, but unlike the VLIW processor, the superscalar processor schedules operations in hardware.

Because of the long instruction words, the VLIW processor has aggravated problems with cache use. In particular, large code size causes cache misses, i.e. situations where needed instructions are not in cache. Large code size also requires a higher main memory bandwidth to transfer code from the main memory to the cache.

Further information about technical backgroun to this application can be found in a co-pending patent application EPO 843 848 by the inventors of the present patent application and assigned to the same applicant and in the following prior applications:
- US Application Ser. No. US 5 450 556 filed October 25, 1993 (PHA 1205), which shows use of guard bits; and
- US Application Ser. No. WO 96/21 186 filed December 30, 1994 (PHA 21,932) which shows a register file for use with VLIW architecture

A computer comprising an instruction cache, according to the preamble to claim 1, is known from the document US-A-5442760. This document discloses an instruction cache located between a decoding stage and a plurality of functional units executing in parallel multiple instructions. In contrast to the computer system of the present application, wherein one instruction per access is fetched, according to the cache of US-A-5442760 multiple instructions may be read out of the cache per access. Therefore, the bit pattern in the instruction cache is not a bit per bit copy of the instructions in the instruction memory.

It is an object of the invention to simplify cache layout.

It is another object of the invention to provide a method of producing a shuffled bit stream, which bit stream allows for a simplified cache layout.

The invention provides for a computer processor as set forth in Claim 1.

This makes it possible to lay-out the input bus and the output bus independently in order to satisfy the requirements of the connections to main memory and the processing unit respectively. Thus a shuffled bit stream is used which simplifies cache layout. The cache stores a shuffled instruction stream and multiplexes bits from storage means onto a bus so that the bits are deshuffled. A multiplicity of lines leading from the storage means to the bus.

The lines do not cross each other.

The invention also relates to a method as set forth in Claim 7. A compiled and linked object module produced by a compiler and/or linker and code is received for swizzling the compiled and linked software to produce a second object module. The second object module is suitable for being deswizzled upon reading from a cache memory using a cache structure whose output bus wires are not crossed.

### BRIEF DESCRIPTION OF THE DRAWING

The invention will now be described by way of non-limitative example with reference to the following figures:
Fig. 1a shows a processor for using the compressed instruction format of the invention;
Fig. 1b shows more detail of the CPU of the processor of Fig. 1a;
Figs. 2a-2e show possible positions of instructions in cache;
Fig. 3 illustrates compilation and linking of code according to the invention;
Fig. 4 is a flow chart of compression and shuffling modules;
Fig. 5 expands box 902 of Fig. 4;
Fig. 6a is a schematic showing the functioning of instruction cache 103 on input;
Fig. 6b is a schematic showing the functioning of a portion of the instruction cache 103 on output;
Fig. 7 is a schematic showing the functioning of instruction cache 104 on output;
Fig. 8 illustrates the decompression process.

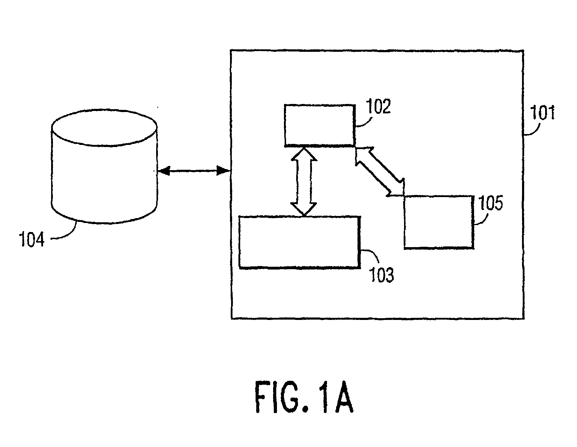

Fig. 1a shows the general structure of a processor according to the invention. A microprocessor according to the invention includes a CPU 102, an instruction cache 103, and a data cache 105. The CPU is connected to the caches by high bandwidth buses. The microprocessor also contains a memory 104 where an instruction stream is stored.

The cache 103 is structured to have 512 bit double words. The individual bytes in the words are addressable, but the bits are not. Bytes are 8 bits long. Preferably the double words are accessible as a single word in a single clock cycle.

The instruction stream is stored as instructions in a compressed format.

The compressed format is used both in the memory 104 and in the cache 103.

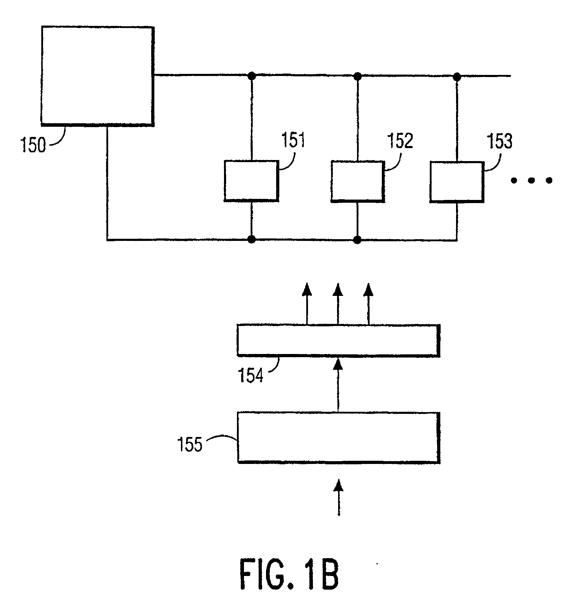

Fig. 1b shows more detail of the VLIW processor according to the invention. The processor includes a multiport register file 150, a number of functional units 151, 152, 153, ..., and an instruction issue register 154, abbreviated IIR. The multiport register file stores results from and operands for the functional units. The instruction issue register includes a plurality of issue slots for containing operations to be commenced in a single clock cycle, in parallel, on the functional units 151, 152, 153, .. A decompression unit 155, converts the compressed instructions from the instruction cache 103 into a form usable by the IIR 154.

Briefly, a compressed instruction contains a format field which specifies which issue slots are to be used by the compressed instruction. For retrieval efficiency, format bits are stored in the instruction preceding the instruction to which the format bits relate. This allows pipelining of instruction retrieval. There are 2*N format bits for an N-issue slot machine, organized as N groups of 2 bits, each group corresponding to an issue slot. The bits in a group specify whether the correspond issue slot is to be used and the operation length occupied by the operation for that issue slot in the instruction.

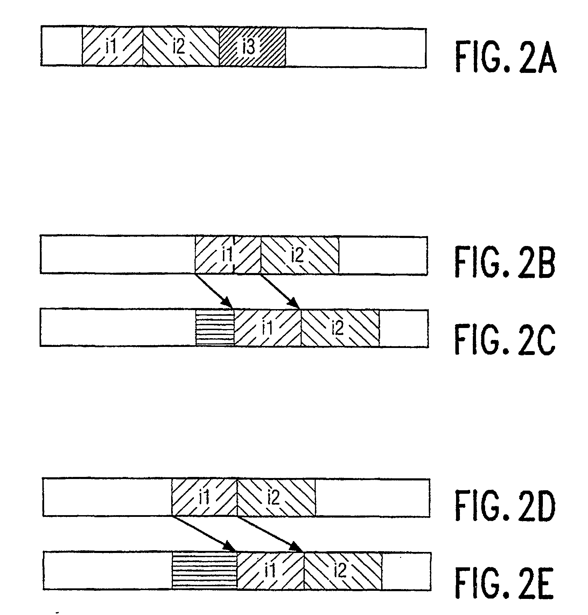

Figs. 2a-2e show possible positions of instructions in cache.

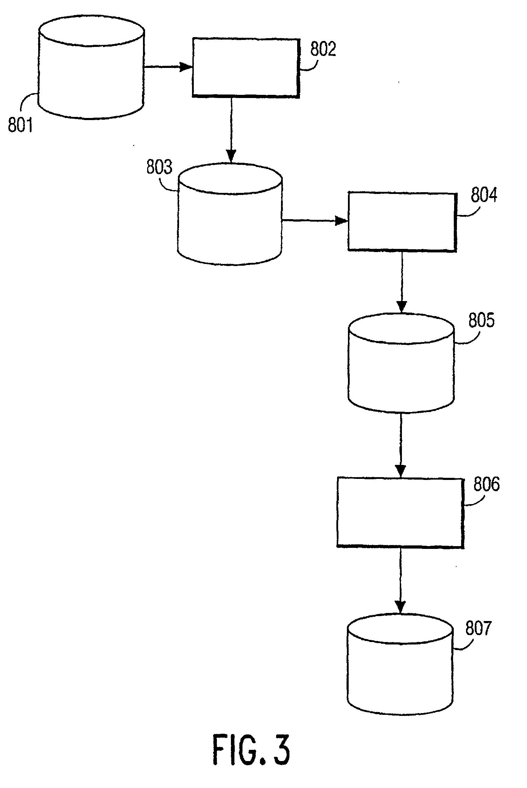

Fig. 3 shows a diagram of how source code becomes a loadable, compressed object module. First the source code 801 must be compiled by compiler 802 to create a first set of object modules 803. These modules are linked by linker 804 to create a second type of object module 805. This module is then compressed and shuffled at 806 to yield loadable module 807.

Any standard compiler or linker can be used. Object modules II contain a number of standard data structures. These include: a header; global & local symbol tables; reference table for relocation information; a section table; and debug information, some of which are used by the compression and shuffling module 807. The object module II also has partitions, including a text partition, where the instructions to be processed reside, and a source partition which keeps track of which source files the text came from.

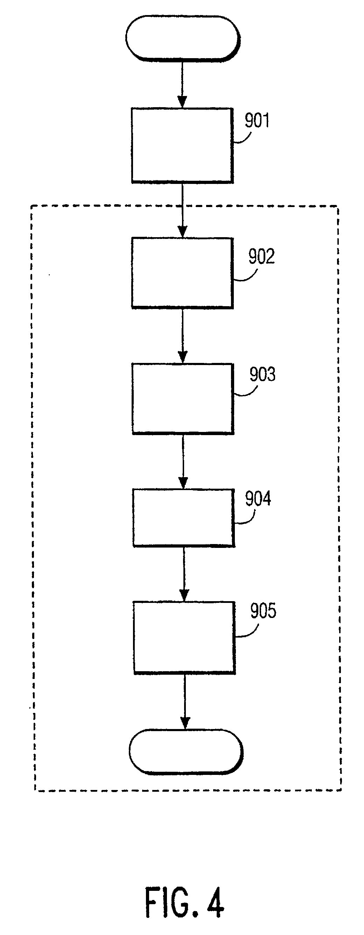

A high level flow chart of the compression and shuffling module is shown at Fig. 4. At 901, object module II is read in. At 902 the text partition is processed. At 903 the other sections are processed. At 904 the header is updated. At 905, the object module is output.

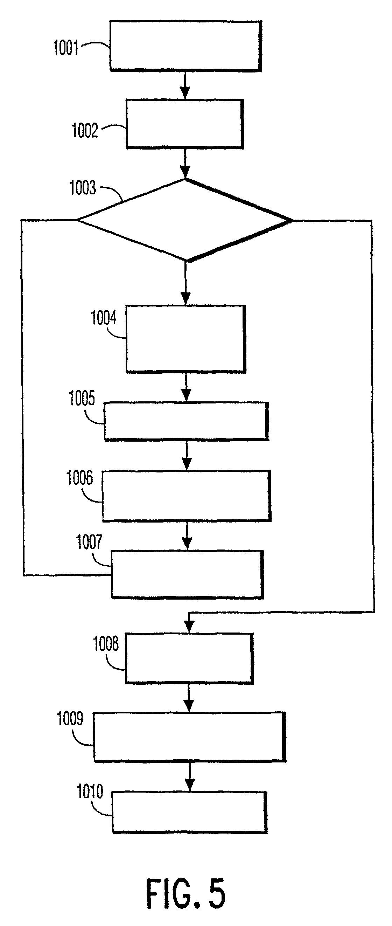

Fig. 5 expands box 902. At 1001, the reference table, i.e. relocation information is gathered. At 1002, the branch targets are collected, because these are not to be compressed. At 1003, the software checks to see if there are more files in the source partition. If so, at 1004, the portion corresponding to the next file is retrieved. Then, at 1005, that portion is compressed. At 1006, file information in the source partition is updated. At 1007, the local symbol table is updated.

Once there are no more files in the source partition, the global symbol table is updated at 1008. Then, at 1009, address references in the text section are updated.

Then at 1010, 256-bit shuffling is effected. Motivation for such shuffling will be discussed below.

The instruction sequence of box 1005 of Fig. 5 will now be explained. First, it is determined whether there are more instructions to be compressed. If so, a next instruction is retrieved. Subsequently each operation in the instruction is compressed and a scatter table is updated. The scatter table is a new data structure, used as a result of compression and shuffling, which will be explained further below. Then, all of the operations in an instruction and the format bits of a subsequent instruction are combined. Subsequently the relocation information in the reference table must be updated, if the current instruction contains an address. Then, the information needed to update address references in the text section is gathered. The compressed instruction is appended at the end of the output bit string and control is returned. When there are no more instructions, control returns to box 1006 of Fig. 5.

The scatter table, which is used as a result of the compression and shuffling of the invention, can be explained as follows.

The reference table contains a list of locations of addresses used by the instruction stream and corresponding list of the actual addresses listed at those locations.

When the code is compressed, and when it is loaded, those addresses must be updated.

Accordingly, the reference table is used at these times to allow the updating.

However, when the code is compressed and shuffled, the actual bits of the addresses are separated from each other and reordered. Therefore, the scatter table lists, for each address in the reference table, where EACH BIT is located. In the preferred embodiment the table lists, a width of a bit field, an offset from the corresponding index of the address in the source text, a corresponding offset from the corresponding index in the address in the destination text.

When object module III is loaded to run on the processor, the scatter table allows the addresses listed in the reference table to be updated even before the bits are deshuffled.

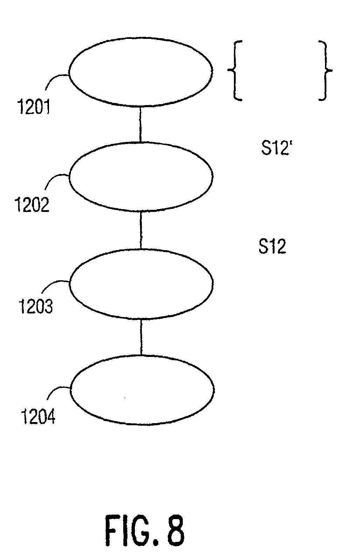

In order for the VLIW processor to process the instructions compressed as described above, the instructions must be decompressed. After decompression, the instructions will fill the instruction register, which has N issue slots, N being 5 in the case of the preferred embodiment. Fig. 8 is a schematic of the decompression process. Instructions come from memory 1201, i.e. either from the main memory 104 or the instruction cache 105. The instructions must then be deshuffled 1201, which will be explained further below, before being decompressed 1203. After decompression 1203, the instructions can proceed to the CPU 1204.

### BIT SWIZZLING

Where instructions are long, e.g. 512 bit double words, cache structure becomes complex. It is advantageous to swizzle the bits of the instructions in order to simplify the layout of the chip. Herein, the words swizzle and shuffle are used to mean the same thing. The following is an algorithm for swizzling bits. 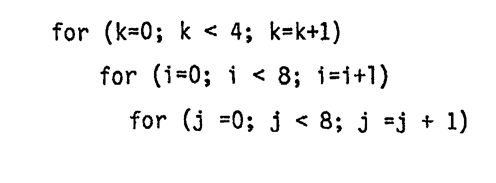 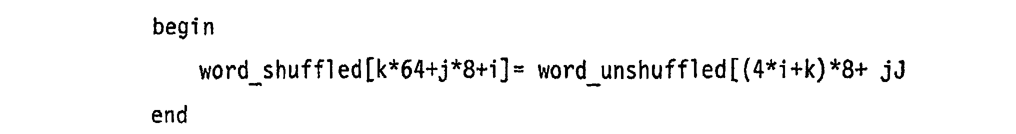 where i, j, and k are integer indices; word_shuffled is a matrix for storing bits of a shuffled word; and word_unshuffled is matrix for storing bits of an unshuffled word.

In this way, index at which a bit is written in the array "word shuffled" is a n=3-3bit logical rotation of the index at which the bit is read from the array "word_unshuffled". (In an n-bit logical rotation the bits of the index are shifted by n-bits to more significant positions and the n most significant bits of the index are placed at the n least significant positions). The particular choice of a n=3-bit rotation is selected for the case described hereinbelow where spatial order of reading bits from the cache is a cyclical interleaving of bits from 8 (=2" n=3) different memory banks.

### CACHE STRUCTURE

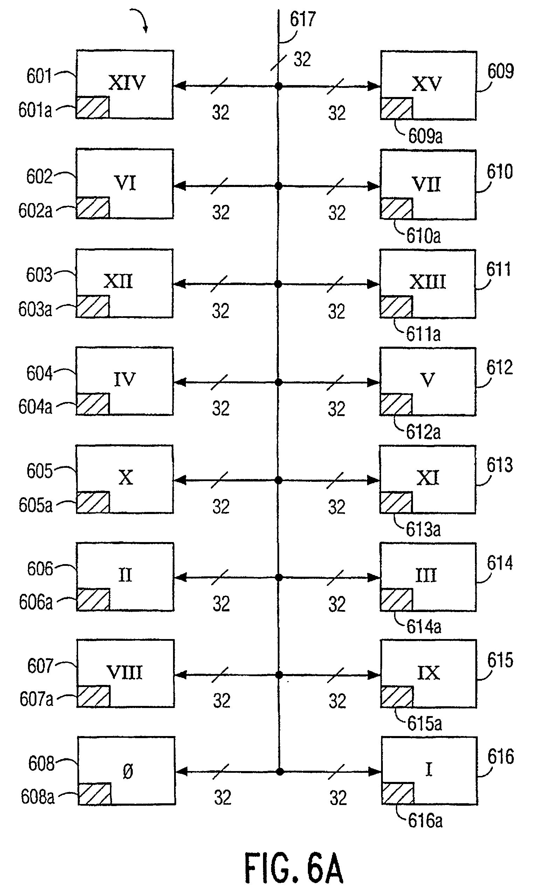

Fig. 6a shows the functioning on input of a cache structure which is useful in efficient processing of VLIW instructions. This cache includes 16 banks 601-616 of 2k bytes each. These banks share an input bus 617. The caches are divided into two stacks. The stack on the left will be referred to as "low" and the stack on the right will be referred to as "high".

The cache can take input in only one bank at a time and then only 4 bytes at a time. Addressing determines which 4 bytes of which bank are being filled. For each 512 bit word to be stored in the cache, 4 bytes are stored in each bank. A shaded portion of each bank is illustrated indicating corresponding portions of each bank for loading of a given word. These shaded portions are for illustration only. Any given word can be loaded into any set of corresponding portions of the banks.

After swizzling according to the algorithm indicated above, sequential 4 byte portions of the swizzled word are loaded into the banks in the following order 608, 616, 606, 614, 604, 612, 602, 610, 607, 615, 605, 613, 603, 611, 601, 609. The order of loading of the 4 byte sections of the swizzled word is indicated by roman numerals in the boxes representing the banks.

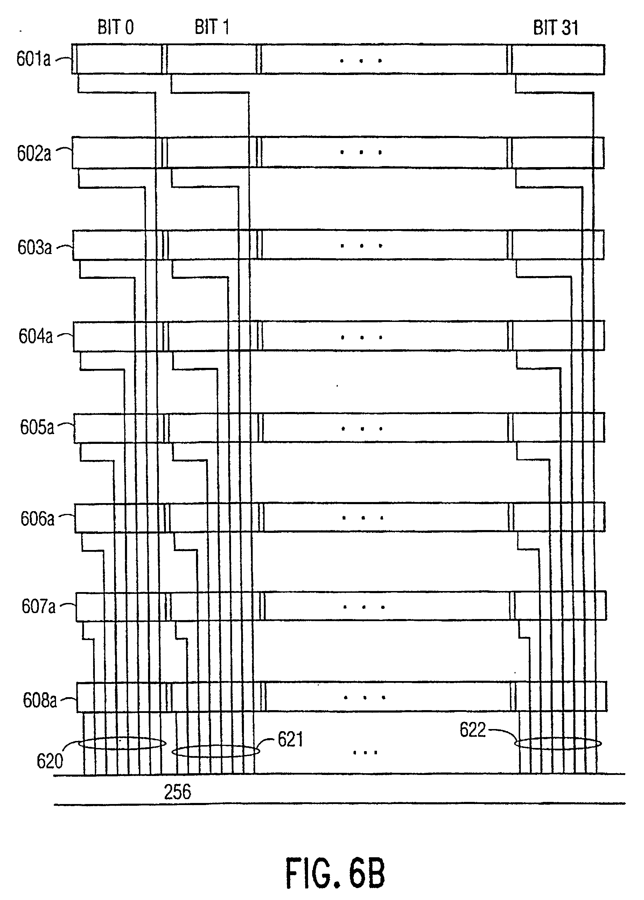

Fig. 6b shows how the swizzled word is read out from the cache. Fig. 6b shows only the shaded portions of the banks of the low stack. The high portion is analogous. Each shaded portion 601a-608a has 32 bits. The bits are loaded onto the output bus, called bus256low using the connections shown, i.e. in the following order: 608a - bit0, 607a - bit 0, ..., 601a - bit 0; 608a - bit 1, 607a - bit, ..., 601a --bit 1; ...; 608a - bit 31, 607a - bit 31, ..., 601a - bit 31. Using these connections, the word is automatically deswizzled back to its proper bit order.

The bundles of wires, 620, 621, ..., 622 together form the output bus256 low. These wires pass through the cache to the output without crossing.

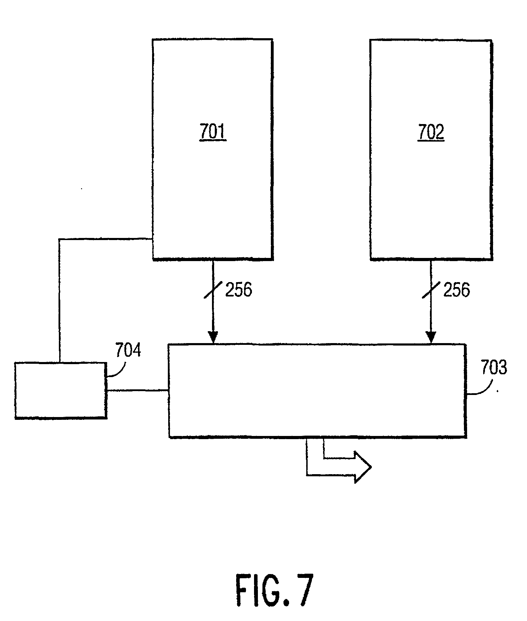

On output, the cache looks like Fig. 7. The bits are read out from stack low 701 and stack high 702 under control of control unit 704 through a shift network 703 which assures that the bits are in the output order specified above. In this way the entire output of the 512 bit word is assured without bundles 620, 621, ... 622 and analogous wires crossing.

Summarizing: the invention provides an instruction cache for use in a computer processor comprising
means for storing respective bits of an instruction stream, which bits are preshuffled; and
means for multiplexing bits from the storage means onto a bus so that the bits are deshuffled, which multiplexing means comprises a multiplicity of lines leading from the storage means to the bus, which lines do not cross each other. Preferably the instruction stream is in double word format; and the cache comprises a first stack for storing first words from the double word format and a second stack for storing second words from the double word format.

Preferably, the stacks are organized into banks and there is one bank for each bit of an output byte on the output bus. Multiplexer means is operative to transfer one bit from each bank in order to create an output byte.

Preferably, the cache is for storing n instructions, where n is an integer variable, and each bank contains at least one respective bit from each of the n instructions.

Each bank contains a RAM column for each byte of an output word. The RAM columns are organized into m groups, where m is an integer representing a number of bytes in the output word, each respective group containing a respective RAM column for each bit of the output word, no two RAM columns in a single group being in a same bank. The multiplexer means comprises m column multiplexers, each column multiplexer being operative to multiplex a bit from each RAM column in the respective group into the output word.

In an embodiment the instruction cache comprises first and second stacks of eight banks, each bank comprising 8 RAM columns of 1-bit 64 RAM cells, the RAM columns being organized into groups of 8 RAM columns, the first stack being for storing lower order bits of a double-word output, the second stack being for storing higher order bits of the double word output. The multiplexing means is operative to multiplex a bit from each RAM column in each respective group into the output word.

Preferably, the cache of comprises first and second buses, the first bus being for outputting lower order bits of an output word and the second bus being for outputting higher order bits of an output word. As a result of the shuffling of the bits the lines of the first and second buses can lie in a same plane of the processor without crossing.

In order to generate an instruction stream for the computer processor, computer software is provided, stored in a computer storage medium, for generating swizzled instructions comprising:
- code for receiving a compiled and linked object module produced by a compiler and/or linker, which object module is stored in a computer storage medium; and
- code for swizzling the compiled and linked software to produce a second object module which second object module is suitable for being deswizzled upon reading from a cache memory using a cache structure whose output bus wires are not crossed.

Preferably the code for swizzling generates a scatter table, stored in a computer storage medium, for storing positions of bits of shuffled instructions relative to the instructions which the bits are from.

In this way the invention provides for a bit stream stored in a computer storage medium which bit stream includes at least a portion of an instruction for execution on a computer processor and stored in a computer storage medium, the portion including a multiplicity of bits, which bits are in a shuffled order, which shuffled order allows a simplified chip layout of the computer processor. The instruction has 512 bits by way of example.

## Claims

1. A computer processor (101) comprising
- an instruction cache (103) having an input bus and an output bus, the input bus receiving bits of an instruction for storage in the instruction cache,
- a processing unit (102) with an instruction input coupled to the output bus for receiving the bits of the instruction,
**characterized in that** the output bus comprises a set of lines for outputting the bits of an instruction in parallel, and **in that** a spatial output order of the bits of the instruction on the set of lines differs from an input order of the received bits via the input bus.

2. A computer processor according to claim 1, wherein the instruction cache comprises a set of banks (601-616) of storage, the instruction comprising words of bits, the input bus being for inputting respective bits in one bank at a time, and wherein respective lines on which the output bus outputs successive bits from a word of an instruction from a bank of the set of banks pass through the cache of banks without crossing each other.

3. A computer processor according to claim 2, wherein the instruction cache comprises a number of output bytes, successive bits of the output bytes being output on spatially successive groups of lines from the set of parallel lines, and wherein each bit of an output byte is supplied by a different bank.

4. A computer processor according to claim 3, wherein each bank comprises a RAM column for each output byte, the RAM columns being organized into m groups, where m is an integer representing a number of bytes in an output word, no two columns in a single group being in a same bank.

5. A computer processor according to anyone of the preceding claims, wherein said instruction cache further comprises: means for multiplexing bits from the storage means onto a bus so that the bits are deshuffled, which multiplexing means comprises a multiplicity of lines leading from the storage means to the bus, which lines do not cross each other.

6. A computer processor according to claim 5, wherein the instruction stream is in double word format; and the cache comprises a first stack for storing first words from the double word format and a second stack for storing second words from the double word format.

7. A computer processor according to claim 6, wherein the first and second stacks are organized into banks.

8. A computer processor according to claim 7, wherein there is one bank for each bit of an output byte on the output bus.

9. A computer processor according to claim 8, wherein the multiplexer means is operative to transfer one bit from each bank in order to create an output byte.

10. A computer processor according to claim 8, wherein the cache is for storing n instructions, where n is an integer variable, and each bank contains at least one respective bit from each of the n instructions.

11. A computer processor according to claim 10, wherein each bank contains a RAM column for each byte of an output word.

12. A computer processor according to claim 9, wherein the RAM columns are organized into m groups, where m is an integer representing a number of bytes in the output word, each respective group containing a respective RAM column for each bit of the output word, no two RAM columns in a single group being in a same bank.

13. A computer processor according to claim 12, wherein the multiplexer means comprises m column multiplexers, each column multiplexer being operative to multiplex a bit from each RAM column in the respective group into the output word.

14. A computer processor according to claim 5, comprising first and second stacks of eight banks, each bank comprising 8 RAM columns of 1-bit 64 RAM cells, the RAM columns being organized into groups of 8 RAM columns, the first stack being for storing lower order bits of a double-word output, the second stack being for storing higher order bits of the double word output; and wherein the multiplexing means is operative to multiplex a bit from each RAM column in each respective group into the output word.

15. A computer processor according to claim 14, wherein the bits are shuffled according to the following algorithm 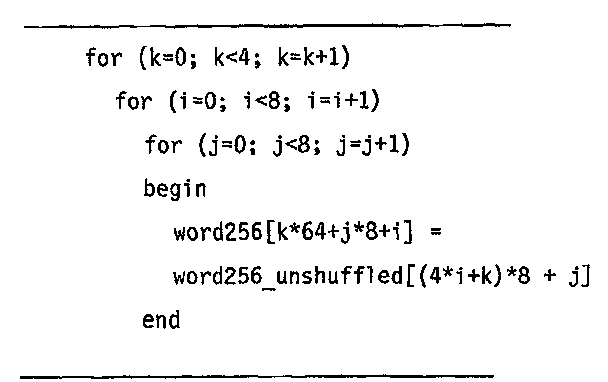 where i, j, and k are integer indices; word256 is a matrix for storing 256 bits of a shuffled word; and word256_unshuffled is a matrix for storing 256 bits of an unshuffled word.

16. A computer processor according to claim 5, further comprising first and second buses, the first bus being for outputting lower order bits of an output word and the second bus being for outputting higher order bits of an output word.

17. A computer processor according to claim 16, wherein as a result of the shuffling of the bits the lines of the first and second buses can lie in a same plane of the processor without crossing.

18. Method of generating instructions for a computer processor having
- an instruction cache (103) having an input bus and an output bus, the input bus receiving bits of an instruction for storage in the instruction cache,
- a processing unit (102) with an instruction input coupled to the output bus for receiving the bits of the instruction,
wherein the method comprises the steps of receiving a compiled and linked object module produced by a compiler and/or linker, **further characterized by the step of**
- shuffling bits in the compiled and linked object module to produce a second object module for writing into the instruction cache so that the bits of the second object module appear on the set of parallel lines successively in the order in which these bits appear in the compiled and linked object module.

19. Method according to claim 18, a number of banks in the set of banks being a power of two, wherein in said shuffling step each bit from the compiled and linked object module having a respective first bit address in the compiled and linked object module is placed at a respective second bit address in the second object module, the respective second bit address being a logical rotation of the respective first bit address by a number of bit places corresponding to said power.

20. Method according to claim 18 or 19, further comprising the step of writing the second object module into an instruction store.

21. Method according to claim 18, 19 or 20, wherein the instruction store comprises a main memory and a cache memory, the set of banks being contained in the cache memory.

22. A computer program comprising program codes means for performing all method steps of any one of the claims 18 to 21, when said program is run on a computer.

23. A computer program product comprising program codes means stored on a computer readable medium for performing the method steps of any one of the claims 18 to 21, when said program product is run on a computer.

24. A bit stream stored in a computer storage medium, which bit stream includes at least a portion of an instruction for execution on a computer processor comprising
- an instruction cache (103) having an input bus and an output bus, the input bus receiving bits of an instruction for storage in the instruction cache,
- a processing unit (102) with an instruction input coupled to the output bus for receiving the bits of the instruction,
**characterized in that** the portion includes a multiplicity of bits, which bits are in a shuffled order, which shuffled order allows a simplified chip layout of the computer processor.

25. The bit stream of claim 24, wherein the bits are shuffled according to the following algorithm: 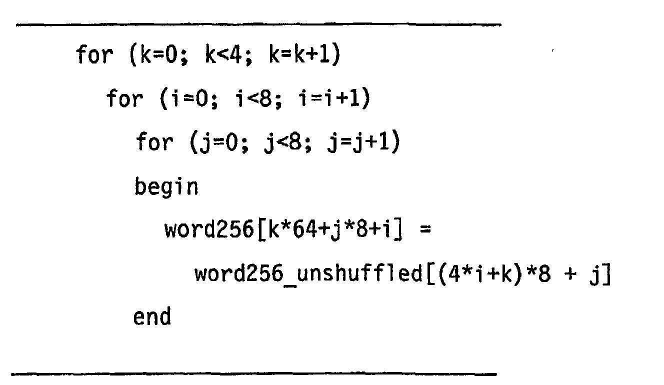 where i, j, and k are integer indices; word256 is a matrix for storing 256 bits of a shuffled word; and word256 unshuffled is a matrix for storing 256 bits of an unshuffled word.

26. The bit stream of claim 24 or 25, wherein the instruction has 512 bits.

27. The bit stream of claim 24, wherein the simplified layout is such that within an instruction cache of the computer processor, all lines of all input and output buses lie within a single plane of an integrated circuit.

## Patentansprüche

1. Computerprozessor (101),
- der einen Befehls-Cache (103) aufweist, der einen Eingabe-Bus und einen Ausgabe-Bus hat, wobei der Eingabe-Bus Bits eines Befehls zur Speicherung in dem Befehls-Cache empfängt,
- der eine Verarbeitungseinheit (102) mit einem Befehlseingang aufweist, der mit dem Ausgabe-Bus verbunden ist um die Bits des Befehls zu empfangen,
**dadurch gekennzeichnet,**
**daß** der Ausgabe-Bus einen Satz von Leitungen zur parallelen Ausgabe der Bits eines Befehls aufweist, und daß eine räumliche Ausgabe-Ordnung der Bits des Befehls auf dem Satz von Leitungen sich von einer Eingabe-Ordnung der empfangenen Bits über den Eingabe-Bus unterscheidet.

2. Computerprozessor nach Anspruch 1, bei dem der Befehls-Cache einen Satz von Speicherbänken (601 - 616) aufweist, wobei der Befehl Worte von Bits aufweist, der Eingabe-Bus dafür da ist, jeweilige Bits in eine Bank auf einmal einzugeben, und bei dem jeweilige Leitungen, auf denen der Ausgabe-Bus nacheinander Bits von einem Wort eines Befehls aus einer Bank des Satzes von Banken ausgibt, den Cache der Banken durchqueren ohne sich gegenseitig zu kreuzen.

3. Computerprozessor nach Anspruch 2, bei dem der Befehls-Speicher eine Anzahl von Ausgabe-Bytes aufweist, wobei aufeinanderfolgende Bits der Ausgabe-Bytes auf räumlich aufeinanderfolgenden Gruppen von Leitungen von dem Satz von parallelen Leitungen ausgegeben werden, und bei dem jedes Bit eines Ausgabe-Bytes von einer unterschiedlichen Bank versorgt wird,

4. , Computerprozessor nach Anspruch 3, bei dem jede Bank eine RAM-Spalte für jedes Ausgabe-Byte aufweist, wobei die RAM-Spalten in m-Gruppen organisiert sind, wobei m eine ganze Zahl ist, die eine Anzahl von Bytes im Ausgabe-Wort repräsentiert, wobei keine zwei Spalten in einer einzelnen Gruppe sich in einer gleichen Bank befinden,

5. Computerprozessor nach einem der vorgehenden Ansprüche, bei dem der Befehls-Speicher weiter Mittel aufweist, um Bites von den Speichermitteln auf einen Bus zu multiplexen, so daß die Bits entmischt sind, wobei die Multiplex-Mittel eine Vielzahl von Leitungen aufweisen, die von den Speichermitteln zu dem Bus führen, wobei sich die Leitungen nicht gegenseitig kreuzen.

6. Computerprozessor nach Anspruch 5, bei dem der Befehls-Strom in Doppel-Wort-Format ist und der Cache einen ersten Stapel zur Speicherung erster Worte aus dem Doppel-Wort-Format und einen zweiten Stapel zur Speicherung zweiter Worte aus dem Doppel-Wort-Format aufweist,

7. Computerprozessor nach Anspruch 6, bei dem die ersten und zweiten Stapel in Banken organisiert sind.

8. Computerprozessor nach Anspruch 7, bei dem eine Bank für jedes Bit eines Ausgabe-Bytes auf dem Ausgabe-Bus existiert.

9. Computerprozessor nach Anspruch 8, bei dem die Multiplexer-Mittel fähig sind, ein Bit von jeder Bank zu transferieren um ein Ausgabe-Byte zu erzeugen,

10. Computerprozessor nach Anspruch 8, bei dem der Cache dazu geeignet ist, um n-Befehle zu speichern, wobei n eine ganzzahlige Variable ist und jede Bank zumindestens ein jeweiliges Bit von jedem der n-Befehle enthält.

11. Computerprozessor nach Anspruch 10, bei dem jede Bank eine RAM-Spalte für jedes Bytes eines Ausgabe-Worts enthält.

12. Computerprozessor nach Anspruch 9, bei dem die RAM-Spalten in m-Gruppen organisiert sind, wobei m eine ganze Zahl ist, die eine Anzahl von Bytes in dem Ausgabe-Wort repräsentiert, jede jeweilige Gruppe eine jeweilige RAM-Spalte für jedes Bit des Ausgabe-Wortes enthält, keine zwei RAM-Spalten in einer einzelnen Gruppe in einer gleichen Bank sind.

13. Computerprozessor nach Anspruch 12, bei dem die Multiplexer Mittel m Spalten-Multiplexer aufweisen, wobei jeder Spalten-Multiplexer fähig ist, ein Bit von jeder RAM-Spalte in der jeweiligen Gruppe In das Ausgabe-Wort zu multiplexen.

14. Computerprozessor nach Anspruch 5, der erste und zweite Stapel von acht Banken aufweist, wobei jede Bank 8 RAM-Spalten von 1-bit 64 RAM-Zellen aufweist, die RAM-Spalten in Gruppen von 8 RAM-Spalten organisiert sind, der erste Stapel zur Speicherung von Bits niedriger Ordnung einer Doppel-Wort-Ausgabe bestimmt ist, der zweite Stapel zur Speicherung Bits hoher Ordnung der Doppel-Wort-Ausgabe bestimmt ist; und bei dem die Multiplexer-Mittel fähig sind, ein Bit von jeder RAM-Spalte in jeder jeweiligen Gruppe in das Ausgabe-Wort zu multiplexen.

15. Computerprozessor nach Anspruch 14, bei dem die Bits gemäß dem folgenden Algorithmus gemischt werden 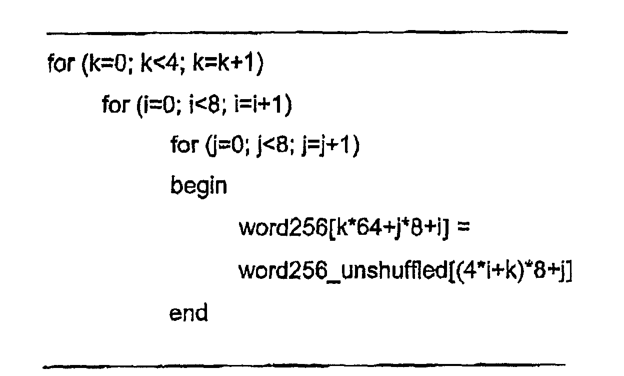 wobei i, j und k ganzzahlige Indizies sind, word256 eine Matrix zur Speicherung von 256 Bits eines gemischten Wortes ist und word256_unshuffled eine Matrix zur Speicherung von 256 Bits eines nicht-gemischten Wortes ist.

16. Computerprozessor nach Anspruch 5, der weiter erste und zweite Busse aufweist, wobei der erste Bus dazu bestimmt ist, Bits niedriger Ordnung eines Ausgabe-Wortes auszugeben und der zweite Bus dazu bestimmt ist, Bits hoher Ordnung eines Ausgabe-Wortes auszugeben.

17. Computerprozessor nach Anspruch 16, bei dem als ein Ergebnis der Mischung der Bits die Leitungen der ersten und zweiten Busse in derselben Ebene des Prozessors ohne Kreuzung liegen können.

18. Verfahren zur Erzeugung von Befehlen für einen Computerprozessor, der
- einen Befehls-Cache (103) hat, der einen Eingabe-Bus und einen Ausgabe-Bus hat, wobei der Eingabe-Bus Bits eines Befehls zur Speicherung in dem Befehls-Cache empfängt,
- eine Verarbeitungseinheit (102) mit einem Befehlseingang hat, der mit dem Ausgabe-Bus zum Empfang der Bits des Befehls verbunden ist,
wobei das Verfahren die Schritte umfaßt, ein kompiliertes und gelinktes Objekt-Modul zu empfangen, das von einem Compiler und/oder einem Linker erzeugt ist,
weiter charakterisiert durch den Schritt
- Bits in dem kompilierten und gelinkten Objekt-Modul zu mischen, um ein zweites Objekt-Modul zum Einschreiben in den Befehls-Speicher zu erzeugen, so daß die Bits des zweiten Objekt-Moduls auf dem Satz von parallelen Linien nacheinander in der Ordnung erscheinen, in der diese Bits in dem kompilierten und gelinkten Objekt-Modul erscheinen.

19. Verfahren nach Anspruch 18, bei dem eine Anzahl von Banken in dem Satz von Banken eine Potenz von 2 ist, wobei in dem Mischungs-Schritt jedes Bit des kompilierten und gelinkten Objekt-Moduls, das eine jeweilige erste Bit-Adresse in dem kompilierten und gelinkten Objekt-Modul hat, wobei auf eine jeweilige zweite Bit-Adresse in dem zweiten Objekt-Modul platziert wird, die jeweilige zweite Bit-Adresse eine logische Rotation der jeweiligen ersten Bit-Adresse um eine Anzahl mit dieser Potenz korrespondierender Bit-Plätze ist.

20. Verfahren nach Anspruch 18 oder 19, das weiter den Schritt umfaßt, das zweite Objekt-Modul in einen Instruktions-Speicher zu schreiben.

21. Verfahren nach Anspruch 18, 19 oder 20, bei dem der Befehls-Speicher einen Hauptspeicher und einen Cach-Speicher aufweist, wobei der Satz von Banken in dem Cach-Speicher enthalten ist.

22. Ein Computerprogramm, das Programm-Code-Mittel zur Ausführung aller Verfahrensschritte eines der Ansprüche 18 bis 21 aufweist, wenn dieses Programm auf einem Computer abläuft.

23. Ein Computerprogramm-Produkt, das auf einem Computer lesbaren Medium gespeicherte Programm-Code-Mittel zur Ausführung der Verfahrensschritte eines der Ansprüche 18 bis 21 aufweist, wenn dieses Programm-Produkt auf einem Computer abläuft.

24. Ein auf einem Computerspeichermedium gespeicherter Bit-Strom, bei dem der Bit-Strom zumindest einen Teil eines Befehls zur Ausführung auf einem Computerprozessor beinhaltet,
- der einen Befehls-Speicher (103) aufweist, der einen Eingabe-Bus und einen Ausgabe-Bus hat, wobei der Eingabe-Bus Bits eines Befehls zur Speicherung in dem Befehls-Cache empfängt,
- der eine Verarbeitungseinheit (102) mit einem Befehls-Eingang aufweist, der mit dem Ausgabe-Bus zum Empfang der Bits des Befehls gekoppelt ist,
**dadurch gekennzeichnet,**
**daß** der Teil eine Vielzahl von Bits beinhaltet, die sich in einer gemischten Ordnung befinden, wobei die gemischte Ordnung ein vereinfachtes Chip-Layout des Computerprozessors ermöglicht.

25. Bit-Strom nach Anspruch 24, wobei die Bits nach dem folgenden Algorithmus gemischt sind: 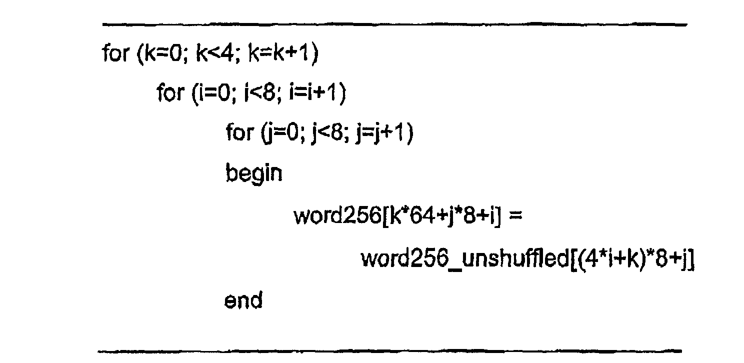 wobei i, j und k ganzzahlige Indizies sind, word256 eine Matrix zur Speicherung von 256 Bits eines gemischten Wortes ist und word256_unshuffled eine Matrix zur Speicherung von 256 Bits eines nicht-gemischten Wortes ist,

26. Bit-Strom nach Anspruch 24 oder 25, bei dem der Befehl 512 Bits hat.

27. Bit-Strom nach Anspruch 24, bei dem das vereinfachte Layout der Gestalt ist, daß innerhalb eines Befehls-Caches des Computerprozessors alle Leitungen von allen Eingabe- und Ausgabe-Bussen innerhalb einer einzigen Ebene einer integrierten Schaltung liegen.

## Revendications

1. Processeur d'ordinateur (101) comprenant :
une mémoire cache d'instructions (103) ayant un bus d'entrée et un bus de sortie, le bus d'entrée recevant des bits d'une instruction pour mémorisation dans la mémoire cache d'instructions,
une unité de traitement (102) avec une entrée d'instruction couplée au bus de sortie pour recevoir les bits de l'instruction, **caractérisé en ce que** le bus de sortie comprend un ensemble de lignes pour sortir les bits d'une instruction en parallèle, et **en ce qu'**un ordre spatial de sortie des bits de l'instruction sur l'ensemble de lignes diffère d'un ordre d'entrée des bits reçus via le bus d'entrée.

2. Processeur d'ordinateur selon la revendication 1, dans lequel la mémoire cache d'instructions comprend un ensemble de blocs (601 à 616) de mémorisation, l'instruction comprenant des mots de bits, le bus d'entrée servant à entrer des bits respectifs dans un bloc à la fois, et dans lequel des lignes respectives, sur lesquelles le bus de sortie sort des bits successifs d'un mot d'une instruction d'un bloc de l'ensemble de blocs, traversent la mémoire cache de blocs sans se croiser les unes les autres.

3. Processeur d'ordinateur selon la revendication 2, dans lequel la mémoire cache d'instructions comprend un certain nombre d'octets de sortie, des bits successifs des octets de sortie étant sortis sur des groupes de lignes qui se suivent spatialement de l'ensemble de lignes parallèles, et dans lequel chaque bit d'un octet de sortie est délivré par un bloc différent.

4. Processeur d'ordinateur selon la revendication 3, dans lequel chaque bloc comprend une colonne de mémoire vive pour chaque octet de sortie, les colonnes de mémoire vive étant organisées en m groupes, où m est un entier représentant un nombre d'octets dans un mot de sortie, deux colonnes dans un groupe unique n'étant pas dans un même bloc.

5. Processeur d'ordinateur selon l'une quelconque des revendications précédentes, dans lequel ladite mémoire cache d'instructions comprend des moyens pour multiplexer des bits provenant des moyens de mémorisation sur un bus de sorte que les bits soient désorganisés, lesquels moyens de multiplexage comprennent une multitude de lignes menant des moyens de mémorisation au bus, lesquelles lignes ne se croisent pas les unes les autres.

6. Processeur d'ordinateur selon la revendication 5, dans lequel le flot d'instructions est dans un format de double mot, et la mémoire cache comprend une première pile pour mémoriser les premiers mots du format de double mot et une deuxième pile pour mémoriser les deuxièmes mots du format de double mot.

7. Processeur d'ordinateur selon la revendication 6, dans lequel les première et deuxième piles sont organisées en blocs.

8. Processeur d'ordinateur selon la revendication 7, dans lequel il y a un bloc pour chaque bit d'un octet de sortie sur le bus de sortie.

9. Processeur d'ordinateur selon la revendication 8, dans lequel les moyens formant multiplexeur servent à transférer un bit de chaque bloc afin de créer un octet de sortie.

10. Processeur d'ordinateur selon la revendication 8, dans lequel la mémoire cache sert à mémoriser n instructions, où n est une variable entière, et chaque bloc contient au moins un bit respectif provenant de chacune des n instructions.

11. Processeur d'ordinateur selon la revendication 10, dans lequel chaque bloc contient une colonne de mémoire vive pour chaque octet d'un mot de sortie.

12. Processeur d'ordinateur selon la revendication 9, dans lequel les colonnes de mémoire vive sont organisées en m groupes, où m est un entier représentant un nombre d'octets dans le mot de sortie, chaque groupe respectif contenant une colonne de mémoire vive respective pour chaque bit du mot de sortie, deux colonnes de mémoire vive dans un groupe unique n'étant pas dans un même bloc.

13. Processeur d'ordinateur selon la revendication 12, dans lequel les moyens formant multiplexeur comprennent m multiplexeurs de colonnes, chaque multiplexeur de colonnes servant à multiplexer un bit de chaque colonne de mémoire vive dans le groupe respectif dans le mot de sortie.

14. Processeur d'ordinateur selon la revendication 5, comprenant des première et deuxième piles de huit blocs, chaque bloc comprenant 8 colonnes de mémoire vive de 64 cellules de mémoire vive d'un bit, les colonnes de mémoire vive étant organisées en groupes de 8 colonnes de mémoire vive, la première pile servant à mémoriser les bits d'ordre inférieur d'une sortie de double mot, la deuxième pile servant à mémoriser les bits d'ordre supérieur de la sortie de double mot, et dans lequel les moyens de multiplexage servent à multiplexer un bit de chaque colonne de mémoire vive dans chaque groupe respectif dans le mot de sortie.

15. Processeur d'ordinateur selon la revendication 14, dans lequel les bits sont organisés selon l'algorithme suivant : 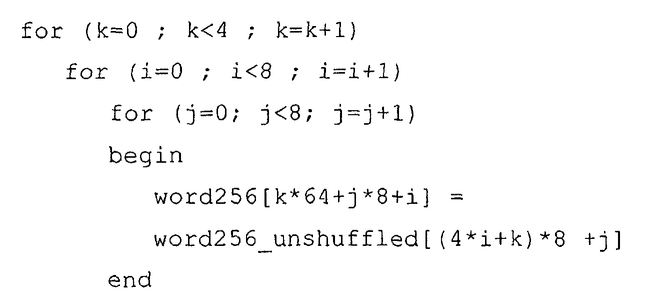 où i, j et k sont des indices entiers, word256 est une matrice pour mémoriser 256 bits d'un mot organisé, et word256_unshuffled est une matrice pour mémoriser 256 bits d'un mot non organisé.

16. Processeur d'ordinateur selon la revendication 5, comprenant en outre des premier et deuxième bus, le premier bus servant à sortir les bits d'ordre inférieur d'un mot de sortie et le deuxième bus servant à sortir les bits d'ordre supérieur d'un mot de sortie.

17. Processeur d'ordinateur selon la revendication 16, dans lequel, en conséquence de l'organisation des bits, les lignes des premier et deuxième bus peuvent se trouver dans un même plan du processeur sans se croiser.

18. Procédé de génération d'instructions pour un processeur d'ordinateur comportant :
une mémoire cache d'instructions (103) ayant un bus d'entrée et un bus de sortie, le bus d'entrée recevant des bits d'une instruction pour mémorisation dans la mémoire cache,
une unité de traitement (102) avec une entrée d'instruction couplée au bus de sortie pour recevoir les bits de l'instruction,
dans lequel le procédé comprend les étapes consistant à recevoir un module objet compilé et lié produit par un compilateur et/ou un éditeur de lien, **caractérisé en outre par** l'étape consistant à
organiser des bits dans le module objet compilé et lié afin de produire un deuxième module objet pour écrire dans la mémoire cache d'instructions de sorte que les bits du deuxième module objet apparaissent sur l'ensemble de lignes parallèles successivement dans l'ordre dans lequel ces bits apparaissent dans le module objet compilé et lié.

19. Procédé selon la revendication 18, un nombre de blocs dans l'ensemble de blocs étant une puissance de deux, dans lequel, dans ladite étape d'organisation, chaque bit du module objet compilé et lié ayant une première adresse de bit respective dans le module objet compilé et lié est placé à une deuxième adresse de bit respective dans le deuxième module objet, la deuxième adresse de bit respective étant une rotation logique de la première adresse de bit respective d'un nombre d'emplacements de bits correspondant à ladite puissance.

20. Procédé selon la revendication 18 ou 19, comprenant en outre l'étape d'écriture du deuxième module objet dans une mémoire d'instructions.

21. Procédé selon la revendication 18, 19 ou 20, dans lequel la mémoire d'instructions comprend une mémoire principale et une mémoire cache, l'ensemble de blocs étant contenu dans la mémoire cache.

22. Programme d'ordinateur comprenant des moyens formant codes de programme pour effectuer toutes les étapes de procédé de l'une quelconque des revendications 18 à 21, lorsque ledit programme est exécuté sur un ordinateur.

23. Produit de programme d'ordinateur comprenant des moyens formant codes de programme mémorisés sur un support pouvant être lu par un ordinateur pour effectuer les étapes de procédé de l'une quelconque des revendications 18 à 21, lorsque ledit produit de programme est exécuté sur un ordinateur.

24. Flot de bits mémorisé sur un support de mémorisation d'ordinateur, lequel flot de bits comprend au moins une partie d'une instruction pour exécution sur un processeur d'ordinateur comprenant :
une mémoire cache d'instructions (103) ayant un bus d'entrée et un bus de sortie, le bus d'entrée recevant des bits d'une instruction pour mémorisation dans la mémoire cache d'instructions,
une unité de traitement (102) avec une entrée d'instruction couplée au bus de sortie pour recevoir les bits de l'instruction, **caractérisé en ce que** la partie comprend une multitude de bits, lesquels bits sont dans un ordre organisé, lequel ordre organisé permet un agencement de composants simplifié du processeur d'ordinateur.

25. Flot de bits selon la revendication 24, dans lequel les bits sont organisés selon l'algorithme suivant : 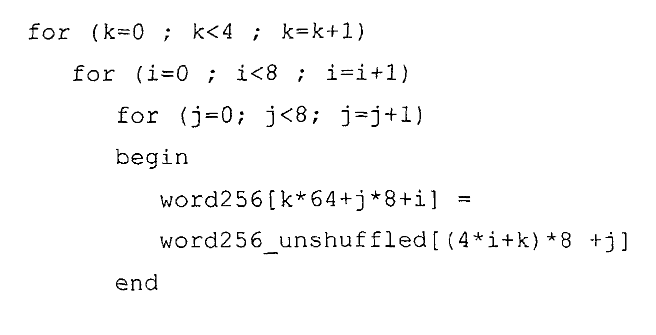 où i, j et k sont des indices entiers, word256 est une matrice pour mémoriser 256 bits d'un mot organisé, et word256_unshuffled est une matrice pour mémoriser 256 bits d'un mot non organisé.

26. Flot de bits selon la revendication 24 ou 25, dans lequel l'instruction comporte 512 bits.

27. Flot de bits selon la revendication 24, dans lequel l'agencement simplifié est tel que, dans une mémoire cache d'instructions du processeur d'ordinateur, toutes les lignes de tous les bus d'entrée et de sortie sont dans un plan unique d'un circuit intégré.
